Europäisches Patentamt

European Patent Office

Office européen des brevets

(11) Publication number: **0 498 048 A1**

# EUROPEAN PATENT APPLICATION

(21) Application number: **91119485.0**

(22) Date of filing: **15.11.91**

(51) Int. Cl.5: **A47J 37/06**, B21D 47/00

Priority number: MI91A000333.

(30) Priority: **08.02.91**

(43) Date of publication of application:
**12.08.92 Bulletin 92/33**

(84) Designated Contracting States:
**AT BE CH DE DK ES FR GB GR LI LU NL SE**

(71) Applicant: **Geronimo, L. Antonio**
**Via Lepontina 10**
**I-20159 - Milano(IT)**

(72) Inventor: **Geronimo, L. Antonio**
**Via Lepontina 10**
**I-20159 - Milano(IT)**

(74) Representative: **Forattini, Amelia et al**
**c/o Internazionale Brevetti Ingg. ZINI,**
**MARANESI & C. S.r.l. Piazza Castello 1**
**I-20121 Milano(IT)**

(54) Process for manufacturing a gridiron for roasting food, and gridiron obtained therewith.

(57) A process for manufacturing a gridiron for roasting food which allows to obtain, from a monolithic metallic plate, grease guiding and dripping channels (13) which are deeper than those currently obtainable in material having a corresponding thickness. This is achieved by performing, with a first operation, transverse cuts (10) in the plate and, with a second operation, a stamping for drawing the channels (12) in the centerlines between the cuts, with simultaneous conversion of the preceding cuts into grilling slots (12).

Fig.2

The present invention relates to a process for manufacturing a gridiron for roasting food and to the gridirons obtained therewith. The invention is particularly aimed at relatively large gridirons, especially but not exclusively suitable for roasting meat or the like or for so-called barbecues, for example on a wood or coal fire.

Gridirons suitable for these uses according to the field of the present invention must have a sturdy construction in order to withstand the considerable thermal stresses and repeated temperature differences in the course of time, for an acceptable duration of the useful life of the implement. They must furthermore have such a surface configuration as to facilitate the channeling of the grease into a drip channel, to prevent it from falling onto the burning coals or onto any other heat source. This implies the forming, in the gridiron, of guiding channels which have a sufficient depth and suitable slope for the conveyance and drainage of the grease.

The provision of said guiding channels of adequate depth by stamping from a metal plate of a thickness sufficient to ensure the required mechanical strength entails problems.

Deep drawing of the material at the channels in fact causes the forming of cracks, splits and/or fractures which prevent its use, both due to mechanical weakening and to difficulty in cleaning caused by these recesses.

Currently commercially available gridirons reflect this situation.

There are in fact gridirons which are monolithic but have a channel depth which is not sufficient to drain the grease or are obtained from plates of insufficient thickness for an acceptable durability of the implement.

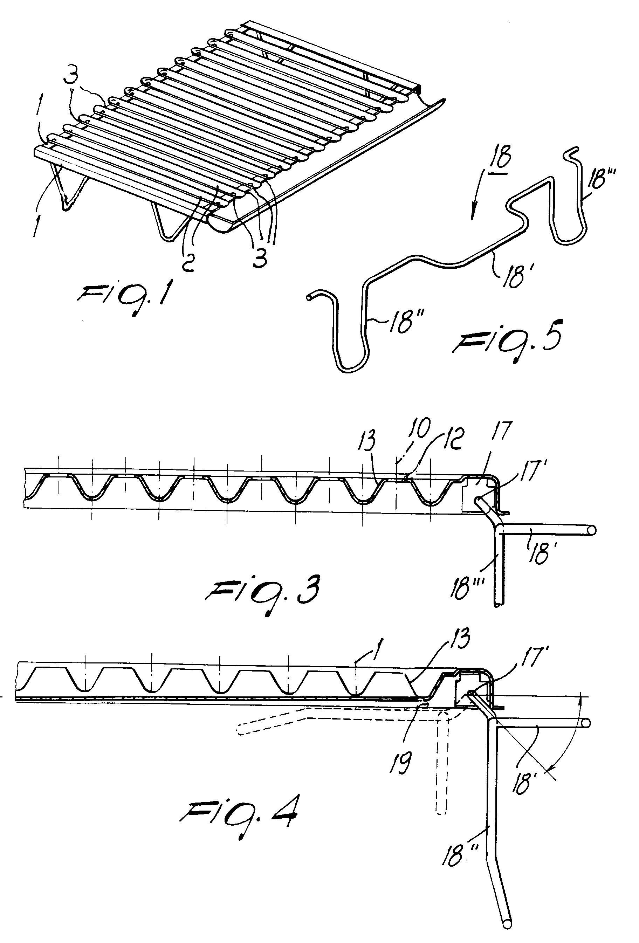

There are also gridirons of the type illustrated in Figure 1, obtained from a frame of metallic profiled elements (1) which are welded at their corners, with applied transverse bars (2) welded to the frame. The applied bars can be obtained so as to have a transverse sectional profile which has a sufficient concavity for the grease conveyance function and has adequate thickness and strength. However, the structure with applied bars has a large amount of recesses and chinks (3) in which food and grease particles accumulate and which make them extremely difficult to clean and thus compromise their hygienic requirements. The great number of welding points furthermore makes the manufacture of said known structure considerably laborious and expensive.

Therefore, the aim of the present invention is to create a process for manufacturing a gridiron for roasting food which allows to obviate the above described problems. In particular, an object of the invention is to obtain gridirons stamped from a single piece of metallic plate which are sufficiently sturdy and have sufficiently deep grease guiding and draining channels.

A further object of the invention is to provide a gridiron structure which is completely free from recesses and chinks and is such as to allow perfect cleaning with maximum ease and hygiene while reducing manufacturing costs with respect to the known art.

This aim and these objects are obtained by means of the manufacturing process described in claim 1.

By virtue of the fact that the operation for drawing the grease guiding and draining channels is preceded by the provision of transverse cuts the length of which corresponds to that of the desired grilling slots and is performed at the centerlines between said transverse cuts, the forming of cracks, splits and/or fractures due to the stretching of the material of the plate during said drawing is eliminated. Said drawing can therefore be performed with the necessary depth in order to obtain a concavity of the transverse section of each channel which is sufficient for grease draining and allows to use a strong and thick plate. Furthermore, said drawing operation simultaneously converts, by stretching, the preceding cuts into slots having the appropriate width for grilling. By virtue of this process according to the invention, the aim is thus achieved in the most simple and economical manner with two simple consecutive cutting and drawing operations, eliminating the laborious multiple welds of the known art and the forming of recesses in the plate, which is perfectly smooth and easy to clean.

The simultaneous execution of the initial contouring of the plate and of the transverse cuts with a single blanking tool further contributes to reduce manufacturing costs and time .

Other particular developments and improvements are described in the other claims and in the following description of an example of embodiment of the invention, given with reference to the accompanying drawings, wherein:

Figure 1 is a perspective view of an example of gridiron for roasting food according to the known art;

Figure 2 is a top plan view of a portion of a gridiron manufactured with the process according to the invention;

Figure 3 is a longitudinal sectional view of said gridiron, taken along the line III-III of Figure 2;

Figure 4 is a longitudinal sectional view of said gridiron, taken along the line IV-IV of Figure 2; and

Figure 5 is a perspective view of a support and grip element of the gridiron according to the invention.

Figure 1 is a perspective view of a gridiron according to the known art, the disadvantages whereof have already been mentioned above and the structure and function whereof are evident and require no further description.

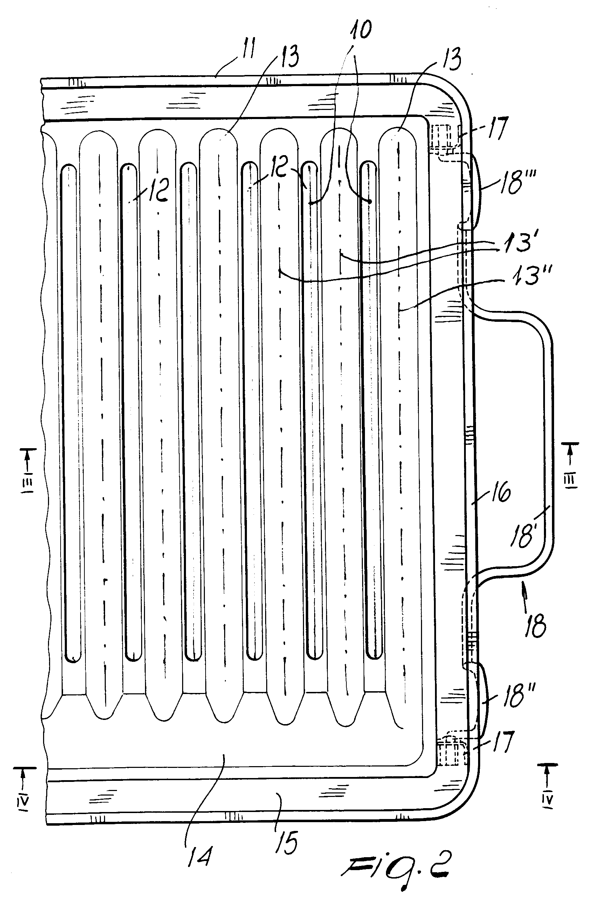

Figure 2 is a plan view of an end of a gridiron manufactured according to the present invention. For the sake of simplicity, the other end, which is executed symmetrically, and the central part have been omitted. Figures 3 and 4 are corresponding sectional views taken along the lines III-III and IV-IV, wherein identical reference numerals correspond to parts which are identical to those of Figure 1.

The reference numeral 10 indicates the outlines of transverse cuts which, together with a rim 11, are produced as first operation on a plate made of steel, preferably stainless steel, by means of a composite blanking tool.

This first operation is followed by the drawing by stamping of grease guiding channels 13 laterally and between the centerlines of said transverse cuts, as well as of the longitudinal collecting channel 14 and of a folding or shaping of the edges 15 of the rim 11 of the plate. Said second operation is conveniently performed by means of a single composite drawing die and conveniently widens, by stretching, the cuts 10 which are converted into the slots 12.

Two angular strips 17 are then welded, preferably by tack welding, onto the lower face of the plate proximate to both of the shorter sides 16 (only one of which is shown in the figures); the wing of said strips which protrudes downward has a hole 17' inside which a respective end of a support and grip element, generally indicated by the reference numeral 18, is inserted; said element is constituted, as more clearly illustrated in Figure 5, by a metallic rod which is bent so as to form a handle 18' and two supports or feet 18'', 18'''. Figures 2, 3 and 4 allow to deduce, in a self-explanatory manner, the appropriate curvatures imparted to the rod for the two grip and support functions. Figure 4 illustrates in solid lines the position assumed by the feet (of which only the one indicated by 18'' is visible) during operation, and shows in broken lines the folded position assumed for transport. The foot 18'' is provided shorter than the foot 18''' in order to convey the grease toward the collection channel 14.

Figure 4 furthermore shows that the longitudinal collection channel 14 is in turn manufactured with a slight slope (angle 19) in order to convey the grease arriving from the transverse channels 13 toward an intermediate discharge hole, not illustrated, of said collection channel.

A shape of the transverse channels such as the one shown in the figures, with a width of approximately 18 mm and a depth of approximately 10 mm, obtained from an X8CR17 UNI6900-71 stainless steel plate 1 mm thick by drawing stamping preceded by the cutting of slits with a pitch of 20 mm, converted by the drawing stamping into slots approximately 8 mm wide in a finished gridiron measuring 480 x 340 mm, has been found to be optimum.

## Claims

1. Process for manufacturing a gridiron for roasting food, constituted by a metallic plate comprising: grease guiding channels (13) which are parallel with respect to one another, parallel grilling slots (12) interleaved between the guiding channels (13), a grease collection channel (14) arranged transversally to the guiding channels (13) at the outlet of one of their ends, said process comprising:

   a) blanking, in a substantially flat plate, of transverse cuts (10) the length of which substantially corresponds to that of the desired grilling slots (12);

   b) the execution, by a drawing press, of the guiding channels (13).

2. Process according to claim 1, characterized in that a step of contouring said flat plate and said step a) are performed simultaneously by means of a single blanking tool.

3. Process according to one or more of the preceding claims, characterized in that the operations of item b) of claim 1 are performed simultaneously by means of a single drawing die.

4. Process according to one or more of the preceding claims, characterized in that operation b) furthermore comprises the provision, halfway along the length of the longitudinal channel (14), of a grease discharge hole, and in that the two halves of the longitudinal channel (14) to the sides of the hole are defined so as to be slightly inclined toward the hole (angle 19).

5. Process according to one or more of the preceeding claims comprising a further step of an application of gridiron supporting means (18'', 18''') suitable for keeping the transverse channels (13) slightly inclined toward the longitudinal collection channel (14).

6. Gridiron for roasting food, comprising grease guiding channels (13) which are parallel with respect to one another, parallel grilling slots (12) interleaved between the guiding channels (13), a grease collection channel (14) arranged transversally to the guiding channels (13) at the outlet of one of their ends, gridiron supporting means (18'', 18''') suitable for keeping the transverse channels (13) slightly inclined toward the longitudinal collection channel (14), the support means (18'', 18''') and the grip means (18') being constituted, for each of the shorter sides (16), by a metallic rod (18), each rod having a wide U-shaped bend (18') which forms a handle at its central part and two narrow U-shaped bends (18'', 18''') which form supporting feet, said supporting feet having different heights.

7. Gridiron according to claim 6 wherein said supporting feet are arranged proximate to the ends of the rod, the central bend (18') being arranged in a plane which is substantially orthogonal to the plane of the bends at the ends (18'', 18'''), and in that the ends of each rod section are inserted in corresponding supports (17').

8. Gridiron according to one or more of the preceeding claims in which said supports (17') comprise two angular strips (17) which are welded to the lower surface of the gridiron proximate to each transverse edge (16).

9. Gridiron according to one or more of the preceding claims, characterized in that the material used is a plate of X8CR17 UNI6900-71 stainless steel or equivalent material, approximately 1 mm thick.

10. Gridiron according to one or more of the preceeding claims in which the transverse cuts (10) obtained by means of operation b) according to claim 1 have a pitch of about 20 mm.

11. Gridiron according to one or more of the preceeding claims in which the drawing die used for operation c) has punches shaped so as to produce, at the centerlines (13') between the cuts and to the side (13'') thereof, transverse channels (13) which are approximately 18 mm wide and approximately 10 mm deep.

12. Gridiron according to one or more of the preceeding claims in which the same drawing operation converts said transverse cuts (10) into slots (12) which are approximately 8 mm wide.

13. Each and every novel feature or novel combination of features herein disclosed.

Fig.1

Fig.5

Fig.3

Fig.4

Fig. 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | GB-A-510 645 (CATTANEO) <br> * the whole document * <br> --- | 1,5,6,9 | A47J37/06 <br> B21D47/00 |
| A | FR-A-438 252 (BUCHERE) <br> * page 2, column G, line 9-14; figures * <br> ----- | 2,3 | |

TECHNICAL FIELDS SEARCHED (Int. Cl.5)

A47J
B21D

The present search report has been drawn up for all claims

| Place of search | Date of completion of the search | Examiner |
|---|---|---|
| THE HAGUE | 23 APRIL 1992 | PEETERS L. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)